# EUROPÄISCHE PATENTSCHRIFT

(11) **EP 3 336 473 B1**
(45) Veröffentlichungstag und Bekanntmachung des Hinweises auf die Patenterteilung: **02.09.2020**
(21) Anmeldenummer: 17200136.4
(22) Anmeldetag: 06.11.2017
(51) Int. Cl.: F28D 20/02, F28F 27/00

(54) **VERFAHREN ZUM BESTIMMEN EINES LADEZUSTANDES EINES LATENTWÄRMESPEICHERS**
METHOD FOR DETERMINING THE CHARGE LEVEL OF A LATENT HEAT STORAGE DEVICE
PROCÉDÉ DE DÉTERMINATION D'UN ÉTAT DE CHARGE D'UN ACCUMULATEUR DE CHALEUR LATENTE

(30) Priorität: 14.12.2016 AT 511402016
(43) Veröffentlichungstag der Anmeldung: 20.06.2018
(73) Patentinhaber: AIT Austrian Institute of Technology GmbH, 1220 Wien (AT)
(72) Erfinder: BARZ, Tilman, 1160 Wien (AT)
(74) Vertreter: Gibler & Poth Patentanwälte KG

(56) Entgegenhaltungen:
- WO-A1-2015/051474
- US-A1- 2014 124 158
- US-A1- 2014 158 340

## Beschreibung

Die Erfindung betrifft ein Verfahren zum Bestimmen eines Ladezustandes eines Latentwärmespeichers gemäß dem Patentanspruch 1.

Latentwärmespeicher sind Speicher für thermische Energie, bei welchen die Wärme in Form von latenter Energie bei einem Phasenwechsel gespeichert wird. Die Bestimmung des Ladezustandes eines Latentwärmespeichers, insbesondere die Frage der noch aufnehmbaren Wärmeenergie, hat sich hierbei als schwierig herausgestellt.

Eine Bestimmung des Ladezustandes kann dadurch erfolgen, dass das Phasenwechselmaterial in einem thermischen Gleichgewicht zu einem Wärmeträgerfluid ist, und von der Temperatur des Wärmeträgerfluids auf die Temperatur des Phasenwechselmaterials geschlossen wird. Nachteilig daran ist, dass dieses Verfahren lediglich dann hinreichend genau ist, wenn die Menge des Wärmeträgerfluids die Menge an Phasenwechselmaterial deutlich übersteigt. Bei kompakteren Ausführungen eines Latentwärmespeichers ist diese Methode daher unzureichend.

Eine weitere Möglichkeit der Bestimmung des Ladezustandes kann durch die Bestimmung von Parametern wie den Druck erfolgen, welcher je nach Zustand des Phasenwechselmaterials einen für den gesamten Latentwärmespeicher gültigen Wert angibt. Nachteilig an dieser Methode ist allerdings der vergleichsweise erhöhte Aufwand zur Kalibrierung und die ungenauere Messmethode.

Aus der US 2014/0158340 A1 ist ein elektrischen Energiespeicher mit Speicherzellen bekannt, welche in einem Phasenwechselmaterial eingebettet sind. Um einen Betrieb des Energiespeichers in einem günstigen Temperaturbereich zu halten, in welchem auch die Phasenumwandlung des Phasenwechselmaterials erfolgt, wird die Temperatur des Phasenwechselmaterials von zwei Temperatursensoren überwacht, und eine Wasserkühlung entsprechend geregelt. Ein erster Temperatursensor ist zentral in dem Phasenwechselmaterial angeordnet, während ein zweiter Temperatursensor am Rand angeordnet ist. Der erste Temperatursensor wird verwendet, wenn aufgrund eines Ladevorganges eine Überhitzung im Zentrum möglich ist, während der zweite Temperatursensor verwendet wird im Falle einer hohen Außentemperatur.

Aus der WO 2015/051474 A1 ist ein Verfahren zur Isolationszeitbestimmung bei einem Wärmeisolationsbehälter bekannt. Der Wärmeisolationsbehälter weist dabei eine Hülle mit Phasenwechselmaterial auf, in welchem mehrere Temperatursensoren angeordnet sind. Zu Isolationszeitbestimmung wird der Temperatursensor mit der ungünstigsten Zeit, bzw. ein Mittelwert aller Temperatursensoren verwendet.

Aus der US 2014/0124158 A1 ist ein Kühlschrank mit einem Phasenwechselmaterial bekannt, welches die vom Kompressor kommende Kälte zwischenspeichern soll.

Aufgabe der Erfindung ist es daher ein Verfahren der eingangs genannten Art anzugeben, mit welchem die genannten Nachteile vermieden werden können, mit welchem es möglich ist den Ladezustand eines Latentwärmespeichers einfach und mit hoher Genauigkeit zu bestimmen.

Erfindungsgemäß wird dies durch die Merkmale des Patentanspruches 1 erreicht.

Dadurch ergibt sich der Vorteil, dass der Ladezustand eines Latentwärmespeichers einfach und mit hoher Genauigkeit bestimmt werden kann. Hierbei kann aufgrund der Messung der Temperatur an wenigen Stellen ein Temperaturfeld innerhalb des Phasenwechselmaterials berechnet werden, und anschließend aufgrund des berechneten Temperaturfeldes zuverlässig auf den Ladezustand geschlossen werden. Dadurch kann auch der Ladezustand von kompakten und/oder komplexen Latentwärmespeicher, in welchen es zu großen Differenzen der Temperatur innerhalb des Phasenwechselmaterials kommen kann, zuverlässig bestimmt werden. Durch die Verwendung von Temperatursensoren ist das Verfahren seitens der Messtechnik einfach durchführbar. Weiters kann der Latentwärmespeicher schnell mit Wärmeenergie be- und entladen werden, da das Einstellen eines Equilibriums nicht zur Bestimmung des Ladezustandes abgewartet werden muss. Da der Ladezustand schnell und zuverlässig bestimmt werden kann, kann ein mit diesem Verfahren überwachter Latentwärmespeicher auch in komplexeren Regelsystemen eingesetzt werden, insbesondere in der Regelung der Bereitstellung von Wärmeenergie in einem Gebäude, bevorzugt Niederenergiehaus oder Passivhaus, oder von industrieller Prozesswärme, insbesondere Dampfnetze, Thermoölanlagen und/oder der Bereitstellung von Heißwasser. Dadurch kann ein mit diesem Verfahren überwachter Latentwärmespeicher helfen, die Erzeugung von Wärmeenergie, und einen damit verbundenen Ausstoß an Treibhausgasen, zu vermeiden.

Weiters betrifft die Erfindung einen Latentwärmespeicher gemäß dem Patentanspruch 8.

Aufgabe der Erfindung ist es daher weiters einen Latentwärmespeicher der eingangs genannten Art anzugeben, mit welchem die genannten Nachteile vermieden werden können, mit welchem es möglich ist den Ladezustand einfach und mit hoher Genauigkeit zu bestimmen.

Erfindungsgemäß wird dies durch die Merkmale des Patentanspruches 8 erreicht. Die Vorteile des Latentwärmespeichers entsprechend den Vorteilen des Verfahrens zum Bestimmen des Ladezustandes des Latentwärmespeichers.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform eines Latentwärmespeichers in einer axonometrischen Darstellung;
Fig. 2 eine Energiebilanzgleichung eines Wärmeträgerfluids der ersten bevorzugten Ausführungsform des Latentwärmespeichers;
Fig. 3 eine Energiebilanzgleichung einer Innenwand der ersten bevorzugten Ausführungsform des Latentwärmespeichers;
Fig. 4 eine Energiebilanzgleichung eines Phasenwechselmaterials der ersten bevorzugten Ausführungsform des Latentwärmespeichers;
Fig. 5 Ansatzpolynome für die Energiebilanzgleichungen in Fig. 2 bis 4;
Fig. 6 ein errechnetes Temperaturfeld für die erste bevorzugte Ausführungsform;
Fig. 7 ein aus dem Temperaturfeld in Fig. 6 bestimmte Verteilung eines lokalen Ladezustandes;
Fig. 8 eine scheinbare spezifische Wärmekapazität eines Phasenwechselmaterials als Funktion der Temperatur;
Fig. 9 einen latenten Anteil der spezifischen Wärmekapazität aus Fig. 8;
Fig. 10 ein Integral des latenten Anteils der spezifischen Wärmekapazität eines Phasenwechselmaterials aus Fig. 9;
Fig. 11 die Funktion aus Fig. 10 mit einem Hystereseeffekt;
Fig. 12 die erste bevorzugte Ausführungsform des Latentwärmespeichers in einer Explosionsdarstellung;
Fig. 13 eine erste bevorzugte Anordnung eines Temperatursensors als Prinzipskizze;
Fig. 14 eine zweite bevorzugte Anordnung eines Temperatursensors als Prinzipskizze;
Fig. 15 eine dritte bevorzugte Anordnung eines Temperatursensors als Prinzipskizze; und
Fig. 16 eine vierte bevorzugte Anordnung eines Temperatursensors als Prinzipskizze.

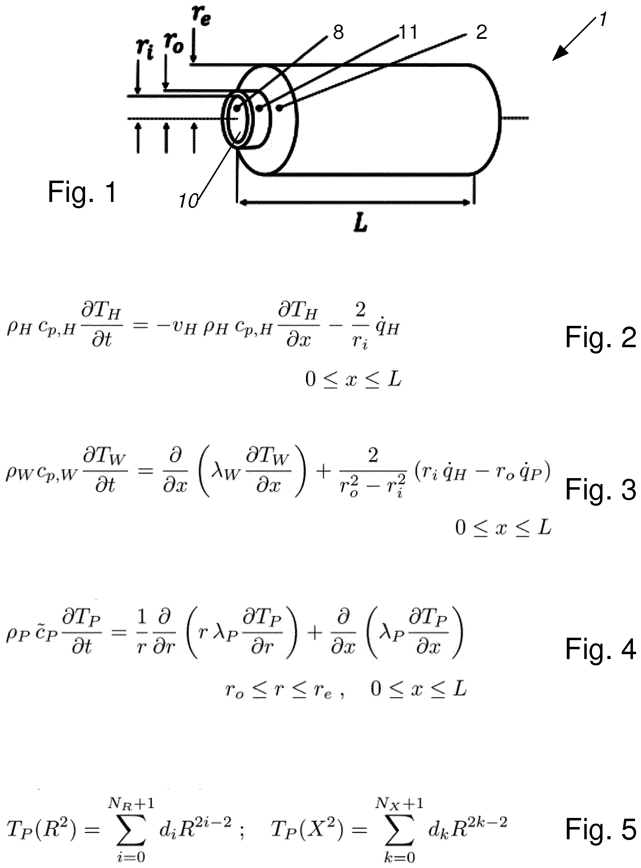

Die Fig. 1 bis 16 zeigen bevorzugte Ausführungsformen und Darstellungen eines Verfahrens zum Bestimmen eines Ladezustandes eines Latentwärmespeichers 1. Ein Latentwärmespeicher 1 ist ein Speicher für Wärmeenergie, wobei die Wärmeenergie hauptsächlich in der Form der latenten Wärme von reversiblen thermodynamischer Zustandsänderungen gespeichert wird. Bei dem Verfahren wird ein Ladezustand eines Latentwärmespeichers 1 bestimmt. Der Ladezustand des Latentwärmespeichers 1 kann insbesondere ein Wert sein, von welchem auf die im Latentwärmespeichers 1 gespeicherte latente Wärmeenergie geschlossen werden kann.

Vorgesehen ist, dass in dem Latentwärmespeicher 1 ein Phasenwechselmaterial 2 im Wesentlichen ortsfest angeordnet ist. Derartige Phasenwechselmaterialien 2 werden oftmals auch als PCM oder Phase-Changing-Material bezeichnet. Hierbei sind eine Vielzahl an Phasenwechselmaterialien 2 mit unterschiedlichen Phasenumwandlungstemperaturen bekannt. Geeignete Phasenwechselmaterialien 2 können insbesondere Polymere oder Salze sein. Je nach Phasenwechselmaterial 2 kann der Phasenübergang an genau einer Temperatur, oder in einem Temperaturbereich stattfinden.

Diese Zustandsänderungen können insbesondere der Phasenübergang des Phasenwechselmaterials 2 zwischen fest und flüssig sein. Die Phasenumwandlungstemperatur kann insbesondere eine Schmelztemperatur oder Erstarrungstemperatur des ersten Phasenwechselmaterials 2 sein.

Alternativ kann vorgesehen sein, dass die Zustandsänderung der Übergang zwischen zwei festen Phasenzuständen des Phasenwechselmaterials 2 ist, insbesondere eine Änderung in der Kristallstruktur, bevorzugt zwischen amorph und kristallin.

Die im Wesentlichen ortsfeste Anordnung des Phasenwechselmaterials 2 bedeutet in diesem Zusammenhang, dass das Phasenwechselmaterial 2 auch in einem flüssigen Phasenzustand ausreichend lokalisiert ist, damit dessen Anordnung für die Berechnung eines Temperaturfeldes 5 als statisch angenommen werden kann. Hierbei erfolgt eine Wärmeübertragung im Phasenwechselmaterial 2 im Wesentlichen lediglich durch Wärmeleitung, während eine Wärmeübertragung über Konvektion lediglich lokal erfolgt und vernachlässigbar ist. Die im Wesentlichen ortsfeste Anordnung kann insbesondere durch ortsfeste Kammern erreicht werden, in welchen Kammern das Phasenwechselmaterial 2 angeordnet ist.

Vorgesehen ist weiters, dass an wenigstens zwei Positionen 3 des Latentwärmespeichers 1 eine Temperatur mittels Temperatursensoren 4 gemessen wird, mit den gemessenen Temperaturen von einer Recheneinheit ein Temperaturfeld 5 in dem Phasenwechselmaterial 2 berechnet wird, und anschließend anhand des Temperaturfeldes 5 ein Ladezustand 6 des Latentwärmespeichers 1 bestimmt wird. Die wenigstens zwei Positionen 3 des Latentwärmespeichers 1 sind thermisch miteinander in Kontakt, also nicht thermisch isoliert, sodass sich aufgrund der Wärmeleitung sich ein Wärmefluss zwischen diesen wenigstens zwei Positionen 3 ausbilden kann. Insbesondere kann vorgesehen sein, dass die wenigstens zwei Positionen 3 in dem gleichen, zusammenhängenden Phasenwechselmaterial 2 angeordnet sind. Aufgrund der gemessenen Temperatur an den wenigstens zwei Positionen 3 kann dann das Temperaturfeld 5, also die örtlich aufgelöste Temperaturverteilung, in dem Phasenwechselmaterial 2 berechnet werden. Aufgrund des Temperaturfeldes 5 kann dann der Ladezustand 6 des Latentwärmespeichers 1 bestimmt werden.

Dadurch ergibt sich der Vorteil, dass der Ladezustand eines Latentwärmespeichers 1 einfach und mit hoher Genauigkeit bestimmt werden kann. Hierbei kann aufgrund der Messung der Temperatur an wenigen Stellen ein Temperaturfeld 5 innerhalb des Phasenwechselmaterials 2 berechnet werden, und anschließend aufgrund des berechneten Temperaturfeldes 5 zuverlässig auf den Ladezustand 6 geschlossen werden. Dadurch kann auch der Ladezustand 6 von kompakten und/oder komplexen Latentwärmespeicher 1, in welchen es zu großen Differenzen der Temperatur innerhalb des Phasenwechselmaterials 2 kommen kann, zuverlässig bestimmt werden. Durch die Verwendung von Temperatursensoren 4 ist das Verfahren seitens der Messtechnik einfach durchführbar. Weiters kann der Latentwärmespeicher 1 schnell mit Wärmeenergie be- und entladen werden, da das Einstellen eines Equilibriums nicht zur Bestimmung des Ladezustandes 6 abgewartet werden muss. Da der Ladezustand 6 schnell und zuverlässig bestimmt werden kann, kann ein mit diesem Verfahren überwachter Latentwärmespeicher 1 auch in komplexeren Regelsystemen eingesetzt werden, insbesondere in der Regelung der Bereitstellung von Wärmeenergie in einem Gebäude, bevorzugt Niederenergiehaus oder Passivhaus, oder von industrieller Prozesswärme, insbesondere Dampfnetze, Thermoölanlagen und/oder der Bereitstellung von Heißwasser. Dadurch kann ein mit diesem Verfahren überwachter Latentwärmespeicher 1 helfen, die Erzeugung von Wärmeenergie, und einen damit verbundenen Ausstoß an Treibhausgasen, zu vermeiden.

Für die Berechnung des Temperaturfeldes 5 kann insbesondere die örtliche Anordnung des Phasenwechselmaterials 2 verwendet werden. Ein Modell der Form und Lage des Phasenwechselmaterials 2 kann insbesondere in der Recheneinheit abgespeichert sein.

Für die Berechnung des Temperaturfeldes 5 können insbesondere die kalorischen Daten des Phasenwechselmaterials 2 verwendet werden. Die kalorischen Daten des Phasenwechselmaterials 2 können insbesondere in der Recheneinheit abgespeichert sein. Die kalorischen Daten des Phasenwechselmaterials 2 betreffen insbesondere dessen spezifische Wärmekapazität. Diese kalorischen Daten können aus Datenblättern entnommen werden und/oder experimentell bestimmt werden.

Das Phasenwechselmaterial 2 des Latentwärmespeichers 1 kann insbesondere homogen sein, also lediglich aus einem Material mit den gleichen kalorischen Daten bestehen.

Alternativ kann vorgesehen sein, dass das Phasenwechselmaterial 2 des Latentwärmespeichers 1 mehrere Materialien mit unterschiedlichen kalorischen Daten aufweist, beispielsweise verschiedene Phasenumwandlungstemperaturen. Das Modell der Form und Lage des Phasenwechselmaterials 2 in der Recheneinheit kann hierbei ebenfalls die Aufteilung der unterschiedlichen Materialien beinhalten.

Weiters ist ein Latentwärmespeicher 1 umfassend das, im Wesentlichen ortsfest angeordneten Phasenwechselmaterial 2 vorgesehen, wobei an den wenigstens zwei Positionen 3 des Latentwärmespeichers 1 die Temperatursensoren 4 angeordnet sind, wobei die Temperatursensoren 4 schaltungstechnisch mit der Recheneinheit zur Bestimmung eines Ladezustandes 6 des Latentwärmespeichers 1 verbunden sind, wobei zur Bestimmung des Ladezustandes 6 von der Recheneinheit anhand von den gemessenen Temperaturen der Temperatursensoren 4 das Temperaturfeld 5 in dem Phasenwechselmaterial 2 berechnet, und anhand des Temperaturfeldes 5 der Ladezustand 6 des Latentwärmespeichers 1 bestimmt wird.

Die, in den Fig. nicht dargestellte, Recheneinheit kann insbesondere elektronisch sein, und bevorzugt einen Prozessor umfassen.

Die Recheneinheit kann insbesondere getrennt von dem restlichen Latentwärmespeicher 1 angeordnet sein, und über Datenkabel oder Funk schaltungstechnisch mit den Temperatursensoren 4 verbunden sein.

Die Recheneinheit kann insbesondere eine Datenausgabeeinheit aufweisen, welche Daten bezüglich des Ladezustands 6 kabelgebunden und/oder mittels Funk sendet. Dadurch können die Daten bezüglich des Ladezustandes 6 in ein Regelsystem eingebunden werden.

Insbesondere kann der Ladezustand 6 des Latentwärmespeichers 1 für die Regelung eines Steuerungssystems zur Bereitstellung von Wärmeenergie verwendet werden. Das Steuerungssystem kann insbesondere ein prädiktives Regelungssystem sein.

Das Steuerungssystem kann insbesondere zur Bereitstellung von Wärmeenergie in einem Gebäude verwendet werden. Durch die genaue Bestimmung des Ladezustandes 6 des Latentwärmespeichers 1 kann das Steuerungssystem beispielsweise vorhersagen, ob die gespeicherte Wärmeenergie ausreichend ist um einen Zeitraum mit hohen Energiekosten zu überbrücken, oder ob zusätzliche Wärmeenergie benötigt wird. Dadurch kann im Sinne intelligenter Energiesysteme der Energieverbrauch auf Zeitpunkte mit üblicherweise geringer Last verschoben werden, wodurch Kosten und Umweltbelastung gering gehalten werden können.

Eine derartige Steuerung kann sowohl im Bereich eines Gebäudes mit Privatwohnungen aber auch in Industriebetrieben zum Einsatz kommen.

Weiters kann vorgesehen sein, dass die Recheneinheit mit einer Anzeigeeinheit schaltungstechnisch verbunden ist.

Gemäß einer bevorzugten Ausführungsform, welche besonders einfach ausgebildet ist, kann vorgesehen sein, dass das Temperaturfeld 5 zwischen den Positionen 3 durch lineare Interpolation berechnet wird. Dadurch kann der Rechenaufwand gering gehalten werden, wobei größere Abweichungen zwischen dem berechneten Temperaturfeld 5 und der Realität vorhanden sein können.

Besonders bevorzugt kann vorgesehen sein, dass zur Berechnung des Temperaturfeldes 5 zumindest für das Phasenwechselmaterial 2 eine Energiebilanzgleichung erstellt wird. Durch die Energiebilanzgleichung zumindest des Phasenwechselmaterials 2 kann anhand der Wärmeleitung und der spezifischen Wärmekapazität ein Modell für ein, der Realität nachempfundenes Temperaturfeld 5 in dem Phasenwechselmaterial 2 berechnet, und an die gemessenen Temperaturen angepasst werden. Dadurch ist eine Berechnung des Temperaturfeldes 5 wesentlich genauer und realistischer als bei einer linearen Interpolation, beziehungsweise erreicht mit weniger Temperatursensoren 4 eine gleich hohe Genauigkeit.

Der Latentwärmespeicher 1 kann insbesondere von eignem Wärmeträgerfluid 8 durchflossen werden. Das Wärmeträgerfluid 8 dient zur Zufuhr und/oder Abfuhr von Wärmeenergie in oder aus dem Latentwärmespeicher 1. Das Wärmeträgerfluid 8 kann insbesondere Wasser sein.

Der Latentwärmespeicher 1 kann weiters festes Latentwärmespeicherstrukturelemente 11 aufweisen. Latentwärmespeicherstrukturelemente 11 sind ortsfeste Strukturen innerhalb des Latentwärmespeichers 1, welche wärmeleitend sind, und im Betriebstemperaturbereich des Latentwärmespeichers 1 keinen Phasenwechsel vollziehen. Die Latentwärmespeicherstrukturelemente 11 können insbesondere Innenwände zwischen dem Wärmeträgerfluid 8 und dem Phasenwechselmaterial 2 und/oder Stützkonstruktionen umfassen.

Die Latentwärmespeicherstrukturelemente 11 können insbesondere als Rohre ausgebildet sein.

Bevorzugt können mehrere Rohre zu einem Rohrbündel zusammengefasst sein.

Weiters kann vorgesehen sein, dass zur Berechnung des Temperaturfeldes 5 für das Wärmeträgerfluid 8 und/oder die Latentwärmespeicherstrukturelemente 11 eine Energiebilanzgleichung erstellt wird. Dadurch können auch diese Randbedingungen in die Berechnung des Temperaturfeldes 5 einbezogen werden.

Eine bevorzugte Vorgehensweise der Berechnung des Temperaturfeldes 5 wird im folgenden anhand der einfachen Geometrie der ersten bevorzugten Ausführungsform in Fig. 1 näher erläutert. Die Erläuterung erfolgt anhand der ersten bevorzugten Ausführungsform, da diese aufgrund der einfachen Geometrie leicht beschreibbar ist. Durch die Aufstellung von Energiebilanzgleichungen können aber auch sehr komplexe Geometrien nummerisch gelöst werden, weshalb die dargestellte Berechnung nicht auf simple Geometrien beschränkt ist.

Fig. 1 zeigt die erste bevorzugte Ausführungsform eines Latentwärmespeichers 1 mit einem hohlzylinderförmigen Latentwärmespeicherstrukturelement 11, welches als Rohr für das Wärmeträgerfluid 8 dient, und auch die Innenwand zwischen dem Wärmeträgerfluid 8 und dem Phasenwechselmaterial 2 ausbildet. Das Latentwärmespeicherstrukturelement 11 weist einen Innenradius rᵢ und einen Außenradius rₒ auf. Um das Latentwärmespeicherstrukturelement 11 ist koaxial das ebenfalls hohlzylinderförmige Phasenwechselmaterial 2 angeordnet, welches den Innenradius rₒ sowie den Außenradius rₑ sowie die Länge L aufweist. Für diese einfache Geometrie können die Energiebilanzgleichungen in einem zylindrischen Koordinatensystem angegeben werden.

Die Energiebilanzgleichung der ersten bevorzugten Ausführungsform für das Wärmeträgerfluid 8 ist in Fig. 2 dargestellt, wobei sich der Indizes H der thermodynamischen Größen auf das Wärmeträgerfluid 8 bezieht.

Die Energiebilanzgleichung der ersten bevorzugten Ausführungsform für das Latentwärmespeicherstrukturelement 11 ist in Fig. 3 dargestellt, wobei sich der Indizes W der thermodynamischen Größen auf das Latentwärmespeicherstrukturelement 11 bezieht.

Die Energiebilanzgleichung der ersten bevorzugten Ausführungsform für das Phasenwechselmaterial 2 ist in Fig. 4 dargestellt, wobei sich der Indizes P der thermodynamischen Größen auf das Phasenwechselmaterial 2 bezieht. Die scheinbare spezifische Wärmekapazität c̃ₚ kann insbesondere eine Kombination aus einem sensiblen Anteil und einem latenten Anteil sein, wobei der latente Anteil insbesondere als skalierte Verteilungsfunktion, beispielsweise eine Gauss oder Weibull Verteilung, modelliert werden kann.

Zur Modellreduktion wird bevorzugt eine örtliche Diskretisierung verwendet. Als effiziente und daher bevorzugte Variante hat sich hierbei eine Kombination der Diskretisierung mit finiten Differenzen für das Wärmeträgerfluid 8, und der Diskretisierung mit dem Verfahren der Orthogonalen Kollokation für das Latentwärmespeicherstrukturelement 11 und das Phasenwechselmaterial 2 gezeigt. Für die Orthogonale Kollokation können insbesondere die in Fig. 5 gezeigten Ansatzpolynome verwendet werden.

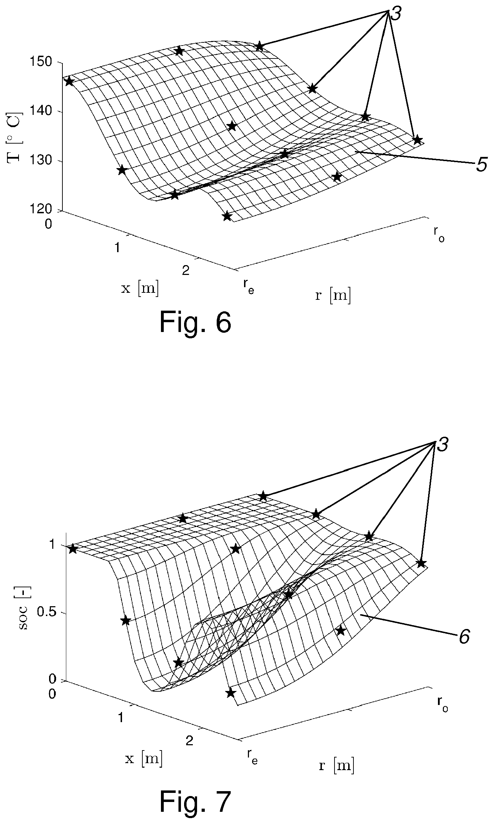

In Fig. 6 ist ein beispielhaftes Temperaturfeld 5 für die erste bevorzugte Ausführungsform des Latentwärmespeichers 1 dargestellt. Der Latentwärmespeicher 1 weist hierbei zwölf Temperatursensoren 4 auf, wobei die Positionen 3 an vier verschiedenen Stellen entlang der Länge und jeweils an der Innenseite, Mitte und der Außenseite des Phasenwechselmaterials 2 angeordnet sind. Nummerisch kann dann anhand der Energiebilanzgleichungen ein passendes Temperaturfeld 5 für diese zwölf gemessenen Temperaturen berechnet werden.

Alternativ könnte das Temperaturfeld 5 mit Temperatursensoren 4 bestimmt werden, welche lediglich entlang der Länge angeordnet sind. Dadurch könnte die Anzahl der Temperatursensoren 4 von zwölf auf vier reduziert werden.

Bevorzugt ist vorgesehen, dass für eine quasi kontinuierliche Bestimmung des Ladezustandes 6 das Temperaturfeld 5 den gemessenen Temperaturen der Temperatursensoren 4 nachgeführt wird. Bevorzugt kann hierfür ein dynamischer Zustandsschätzer eingesetzt werden, wie beispielsweise ein Kalman Filter. Als Zustandsschätzer können bevorzugt ein sogenannter Extended Kalman Filter oder ein Unscented Kalman Filter eingesetzt werden. Weiters könnte ein Moving Horizon Schätzer als Zustandsschätzer eingesetzt werden

Weiters kann eine Linearisierung der Energiebilanzgleichungen für den Einsatz von linearen Schätzern durchgeführt werden.

Anhand des Temperaturfeldes 5 wird anschließend der Ladezustand 6 bestimmt. Bevorzugt kann vorgesehen sein, dass der Ladezustand 6 ein Verhältnis des Phasenwechselmaterials 2 in einem ersten Phasenzustand zu der Summe des Phasenwechselmaterials 2 in dem ersten Phasenzustand und einem zweiten Phasenzustand ist. Sofern der Phasenwechsel zwischen einem festen Phasenzustand und einem flüssigen Phasenzustand ist, kann der Ladezustand 6 insbesondere das Verhältnis von einem flüssigen Phasenwechselmaterial 2 zu der Summe aus festen und flüssigen Phasenwechselmaterial 2 sein. Hierbei hat sich gezeigt, dass eine derartige Definition des Ladezustandes besonders aussagekräftig ist und linear mit der gespeicherten latenten Wärmeenergie ansteigt. Anhand des Temperaturfeldes 5 wird eine Verteilung eines lokalen Ladezustandes 6 bestimmt. Die Verteilung eines lokalen Ladezustandes 6 kann insbesondere als Ladezustandsfeld bezeichnet werden. Der Ladezustand 6 kann daher bevorzugt als Ladezustandsfeld des Phasenwechselmaterials 2 bestimmt werden, wobei der lokale Ladezustand 6 bevorzugt mit derselben örtlichen Auflösung wie das Temperaturfeld 5 bestimmt wird. Die Verteilung des lokalen Ladezustandes 6 kann insbesondere über die Datenausgabeeinheit ausgegeben werden. Um einen globalen Ladezustand 6 des gesamten Phasenwechselmaterials 2 zu bestimmen kann der lokale Ladezustand 6 über das Volumen des Phasenwechselmaterials 2 integriert werden. Die Verteilung des lokalen Ladezustandes 6 bei einem Temperaturfeld gemäß Fig. 6 ist in Fig. 7 dargestellt.

Die Bereitstellung der Verteilung des lokalen Ladezustandes 6 hat gegenüber dem globalen Ladezustand 6 den Vorteil, dass anhand dieser nicht nur die gespeicherte Wärmeenergie bestimmt werden kann, sondern auch Vorhersagen getroffen werden können, wie ein Beladevorgang oder Entladevorgang des Latentwärmespeichers 1 erfolgen wird. Wenn beispielsweise das Phasenwechselmaterial 2 hauptsächlich an einer dem Wärmeträgerfluid 8 zugewandten Seite des Phasenwechselmaterials 2 geschmolzen ist, kann bei einem gleichen globalen Ladezustand 6 mehr Wärmeenergie in einer kurzen Zeitspanne abgeführt werden, wie bei einer gleichmäßigen Verteilung des lokalen Ladezustands 6 und daher auch der latenten Wärmeenergie im gesamten Phasenwechselmaterial 2. Dadurch kann das Steuerungssystem erkennen, wie beim derzeitigen Ladezustand 6 ein Beladevorgang oder Entladevorgang ablaufen wird, und insbesondere, ob die benötigte Wärmeenergie für einen Prozess aus dem Latentwärmespeicher 1 komplett entnommen werden kann, oder ob eine zusätzliche Erzeugung von Wärmeenergie notwendig ist.

Besonders bevorzugt kann vorgesehen sein, dass das Temperaturfeld 5 in vorgebbaren zeitlichen Abständen neu berechnet wird. Eine derartige regelmäßige Neuberechnung des Temperaturfeldes 5 kann auch als quasi kontinuierlich bezeichnet werden.

Der vorgebbare zeitliche Abstand kann insbesondere zwischen 1 Stunde und 1 Sekunde, insbesondere zwischen 10 min und 10 Sekunden, betragen, wobei der vorgebbare zeitliche Abstand insbesondere von der Größe des Latentwärmespeichers 1 abhängen kann.

Bevorzugt kann weiters vorgesehen sein, dass durch einen Vergleich des Temperaturfeldes 5 mit dem vorangegangenen Temperaturfeld 5 eine zeitliche Änderung der berechneten Temperaturen erstellt wird.

Besonders bevorzugt kann vorgesehen sein, dass eine zeitliche Änderung der gemessenen Temperaturen von der Recheneinheit zur Berechnung des Temperaturfeldes 5 in dem Phasenwechselmaterial 2 verwendet wird. Somit stehen pro Temperatursensor 4 zwei physikalische Messgrößen zur Verfügung, welche zum Abgleich mit dem berechneten Temperaturfeld 5 verwendet werden können, nämlich die Temperatur an sich aber auch die zeitliche Änderung, also Ableitung, der Temperatur. Dadurch verdoppelt sich bei einer gleichbleibenden Anzahl an Temperatursensor 4 die Messwerte, welche zur Berechnung des Temperaturfeldes 5 zur Verfügung stehen, wodurch das berechnete Temperaturfeld 5 mit einem noch geringeren Fehler berechnet werden kann, beziehungsweise kann eine gleiche Genauigkeit mit weniger Temperatursensoren 4 erreicht werden.

Bei der Bestimmung des Ladezustandes 6 kann das temperaturabhängige Verhalten des Phasenwechselmaterials 2 berücksichtigt werden, welches bevorzugt als kalorische Daten vorliegt.

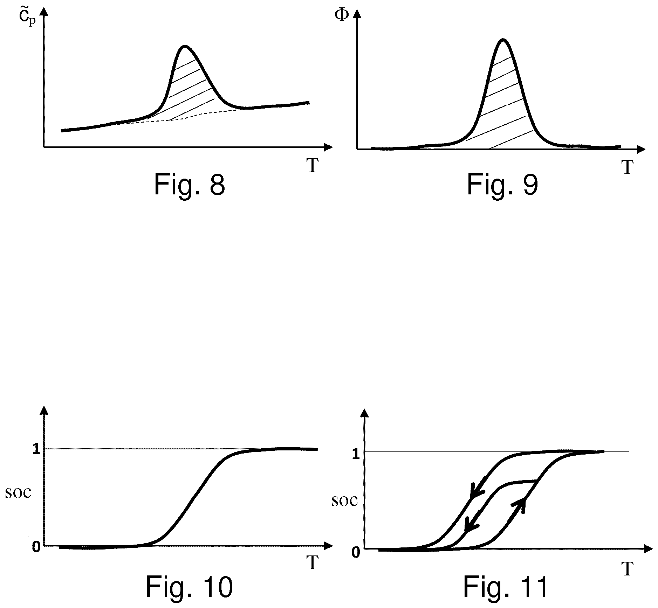

In Fig. 8 ist beispielhaft die scheinbare spezifische Wärmekapazität c̃ₚ eines Phasenwechselmaterials 2 als Funktion der Temperatur dargestellt, bei welchem der Phasenübergang innerhalb eines Temperaturbereiches erfolgt.

In Fig. 9 ist der latente Anteil Φ der Wärmekapazität dargestellt, welcher der schraffierten Fläche in Fig. 8 entspricht.

In Fig. 10 ist eine integrale Darstellung des latenten Anteils Φ der Wärmekapazität dargestellt, welche auf 1 normiert ist, und welche dem Ladezustand 6 entspricht. Die Ordinatenachse ist mit soc für "state of Charge" beschriftet. Die in Fig. 10 dargestellte Funktion stellt einen Idealzustand dar, welcher bijektiv ist und daher von einer Temperatur direkt auf einen Ladezustand geschlossen werden kann.

In der Realität ist dieser direkte Zusammenhang oft nicht unmittelbar gegeben, sondern der Phasenwechsel von dem ersten Phasenzustand zu dem zweiten Phasenzustand erfolgt oft nach einer anderen Kurve als der umgekehrte Phasenwechsel, wie dies beispielhaft in Fig. 11 angedeutet ist, oder zeitlich verzögert. Derartige hystereseartigen Effekte werden oftmals durch ein Überhitzen oder Unterkühlen des Phasenwechselmaterials 2 verursacht. Weiters erfolgt eine Phasenumwandlung in der Realität nicht schlagartig, sondern erst nach einer gewissen Zeit, beispielsweise weil ein Kristallwachstum eine gewisse Zeit benötigt.

Insbesondere kann vorgesehen sein, dass für die Bestimmung des Ladezustandes 6 anhand des Temperaturfeldes 5 ein vorangegangener Ladezustand 6 des Phasenwechselmaterials 2 miteinbezogen wird. Der vorangegangene Ladezustand 6 ist hierbei ein bei einer vorigen Messung bereits bestimmter Ladezustand 6. Bei einem quasi kontinuierlichen Betrieb kann der vorangegangene Ladezustand 6 bevorzugt der unmittelbar vorangegangene, also letzte vorhandene, Ladezustand 6 sein. Dadurch können bei der Bestimmung des Ladezustandes 6 der zeitliche Verlauf der Änderung des Ladezustandes 6, und somit auch ein zeitabhängiges oder richtungsabhängiges Verhalten des Phasenwechselmaterials 2 mitberücksichtigt werden. Das zeitliche oder richtungsabhängige Verhalten des Phasenwechselmaterials 2 kann als Teil der kalorischen Daten des Phasenwechselmaterials 2 vorliegen, insbesondere abgespeichert sein. Dadurch kann ebenfalls auf einfache Weise und ohne zusätzliche Sensorik die Bestimmung des Ladezustandes 6 zusätzlich verbessert werden.

Besonders bevorzugt kann für die Bestimmung des Ladezustandes 6 sowohl der vorangegangene Ladezustand 6 als auch die zeitliche Änderung des Temperaturfeldes 5 miteinbezogen werden. Dadurch kann eine besonders genaue Bestimmung des Ladezustandes 6 erfolgen.

Bevorzugt kann weiters vorgesehen sein, dass eine Wärmezufuhr in den Latentwärmespeicher 1 und eine Wärmeabfuhr aus dem Latentwärmespeicher 1 gemessen, und von der Recheneinheit zur Berechnung des Temperaturfeldes 5 in dem Phasenwechselmaterial 2 verwendet wird. Die Wärmezufuhr und die Wärmeabfuhr können insbesondere mittels dem Wärmeträgerfluid 8 erfolgen. Durch die Messung der Wärmezufuhr in den Latentwärmespeicher 1 und eine Wärmeabfuhr aus dem Latentwärmespeicher 1 kann einfach die Genauigkeit der Berechnung verbessert werden.

Bei dem Latentwärmespeicher 1 kann vorgesehen sein, dass der Latentwärmespeicher 1 einen Zufluss 10 und einem Abfluss für ein Wärmeträgerfluid 8 aufweist, und dass beim Zufluss 10 und beim Abfluss ein Sensor zur Bestimmung der zugeführten Wärmeenergie und der abgeführten Wärmeenergie angeordnet ist. Die Sensoren zur Bestimmung der zugeführten Wärmeenergie und der abgeführten Wärmeenergie können insbesondere einen Durchflusssensor und einen weiteren Temperatursensor zur Messung der Temperatur des Wärmeträgerfluids 8 aufweisen.

Bevorzugt kann vorgesehen sein, dass der Latentwärmespeicher 1 weniger als 40, insbesondere weniger als 20, besonders bevorzugt weniger als 10, Temperatursensoren 4 aufweist. Hierbei würde die Temperatur an weniger als 40, insbesondere weniger als 20, besonders bevorzugt weniger als 10, Positionen 3 gemessen werden. Dadurch kann die Zahl der benötigten Temperatursensoren 4 auf eine wirtschaftlich vernünftige geringe Anzahl gehalten werden.

Weiters kann vorgesehen sein, dass der Latentwärmespeicher 1 mehr als 3, bevorzugt mehr als 5, Temperatursensoren 4 aufweist.

Insbesondere kann vorgesehen sein, dass zumindest 2 der Temperatursensoren 4 einen im Wesentlichen unmittelbaren Kontakt zu dem Phasenwechselmaterial 2 haben. Der im Wesentlichen unmittelbare Kontakt bedeutet in diesem Zusammenhang, dass zwischen dem Temperatursensor 4, beziehungsweise dessen Messfühler, und dem Phasenwechselmaterial 2 lediglich eine gut wärmeleitende Trennschicht angeordnet sein kann. Dadurch kann eine möglichst umgehende Messung der Temperatur des Phasenwechselmaterials 2 erfolgen.

Weiters kann vorgesehen sein, dass die Temperatursensoren 4 in einer Außenhülle des Latentwärmespeichers 1 angeordnet sind. Dadurch ist auch eine nachträgliche Nachrüstung bestehender Latentwärmespeicher 1 möglich.

Die Temperatursensoren 4 können in dem Phasenwechselmaterial 2 nach Vorgabe der optimalen Stützstellen der gewählten Ansatzpolynome angeordnet sein. Insbesondere kann die Ermittlung der Positionen 3 nach Auswertung der Orthogonalitätsbedingungen der Ansatzpolynome erfolgen. Diese Ermittlung hat während der Konstruktion des Latentwärmespeichers 1 zu erfolgen.

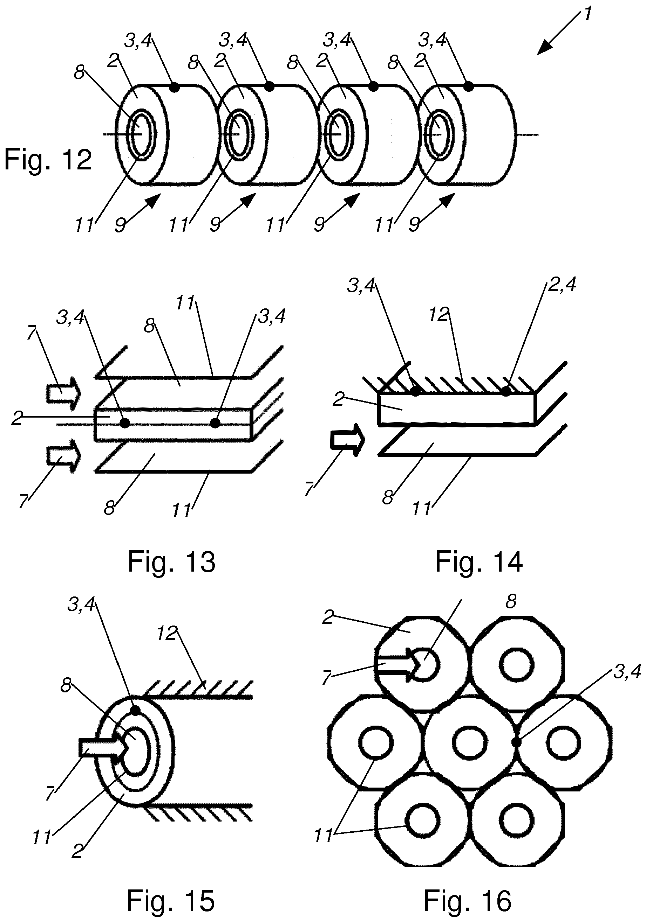

In den Fig. 13 bis 16 sind einige bevorzugte Ausführungsformen der Anordnung von Temperaturensensoren bei einigen üblichen Geometriebestandteilen von Latentwärmespeicher 1 dargestellt.

In Fig. 13 ist eine Plattenwärmetauscheranordnung mit beidseitig überströmten Phasenwechselmaterial 2 dargestellt. Die Anordnung der Temperatursensoren 4 kann hierbei insbesondere in der Mitte des Phasenwechselmaterials 2 erfolgen.

In Fig. 14 ist eine Plattenwärmetauscheranordnung mit einem einseitig überströmten Phasenwechselmaterial 2 dargestellt, wobei an einer dem Wärmeträgerfluid 8 abgewandten Seite ein Isolationsmaterial 12 ist. Hierbei kann der Temperatursensoren 4 insbesondere am Übergang vom Phasenwechselmaterial 2 zu dem Isolationsmaterial 12 angeordnet sein, da ein Wärmeabtransport über das Isolationsmaterial 12 üblicherweise vernachlässigbar ist.

In Fig. 15 ist eine Rohrwärmetauscheranordnung mit einem Mantel aus einem Phasenwechselmaterial 2 dargestellt. Hierbei können die Temperatursensoren 4 mittig im Phasenwechselmaterial 2 angeordnet sein.

In Fig. 16 ist eine Rohrbündelwärmetauscheranordnung mit mehreren Rohrwärmetauscheranordnungen wie in Fig. 15 dargestellt. Hierbei können die Temperatursensoren 4 an den Kontaktpunkten der einzelnen Rohre untereinander angeordnet sein.

Insbesondere kann vorgesehen sein, dass das Phasenwechselmaterial 2 für die Berechnung des Temperaturfeldes 5 entlang einer Flussrichtung 7 eines Wärmeträgerfluids 8 in mehrere Sektoren 9 unterteilt wird, und dass pro Sektor 9 lediglich eine gemessene Temperatur für die Berechnung des Temperaturfeldes 5 verwendet wird. Bei dem Latentwärmespeicher kann vorgesehen sein, dass die Temperatursensoren 4 entlang einer Flussrichtung 7 des Wärmeträgerfluids 8 angeordnet sind. Bevorzugt erfolgt eine bilanzielle Segmentierung des Latentwärmespeichers 1 entlang der Flussrichtung 7 des Wärmeträgerfluids 8. Dadurch kann die Anzahl der Temperatursensoren 4 und der damit verbundene messtechnische Aufwand gering gehalten werden. Ein beispielhafter Ansatz zur Segmentierung des Latentwärmespeichers 1 entlang der Flussrichtung 7 mit der Anordnung der Temperatursensoren 4 ist in Fig. 12 dargestellt.

Weiters kann vorgesehen sein, dass einer der Temperatursensor 4 mehrere Messfühler aufweist, wobei die gemessene Temperatur des Temperatursensors 4 ein Mittelwert von Messwerten der Messfühler ist. Die Messfühler können an unterschiedlichen Stellen angeordnet werden, an welchen mit einer gleichen Temperatur zu rechnen ist. Der Messwert der Messfühler wird dann gemittelt um die gemessene Temperatur zu ermitteln. Durch eine derartige Anordnung können etwaige Messfehler der einzelnen Messfühler reduziert werden.

## Patentansprüche

1. Verfahren zum Bestimmen eines Ladezustandes eines Latentwärmespeichers (1), wobei in dem Latentwärmespeicher (1) ein Phasenwechselmaterial (2) im Wesentlichen ortsfest angeordnet ist, wobei an wenigstens zwei Positionen (3) des Latentwärmespeichers (1) eine Temperatur mittels Temperatursensoren (4) gemessen wird, **dadurch gekennzeichnet, dass** mit den gemessenen Temperaturen von einer Recheneinheit ein Temperaturfeld (5) in dem Phasenwechselmaterial (2) berechnet wird, und dass anhand des Temperaturfeldes (5) eine Verteilung eines lokalen Ladezustandes (6) des Phasenwechselmaterials (2) bestimmt wird.

2. Verfahren nach Anspruch 1, **dadurch gekennzeichnet, dass** zur Berechnung des Temperaturfeldes (5) zumindest für das Phasenwechselmaterial (2) eine Energiebilanzgleichung erstellt wird.

3. Verfahren nach Anspruch 1 oder 2, **dadurch gekennzeichnet, dass** der Ladezustand (6) ein Verhältnis des Phasenwechselmaterials (2) in einem ersten Phasenzustand zu der Summe des Phasenwechselmaterials (2) in dem ersten Phasenzustand und einem zweiten Phasenzustand ist.

4. Verfahren nach einem der Ansprüche 1 bis 3, **dadurch gekennzeichnet, dass** eine zeitliche Änderung der gemessenen Temperaturen von der Recheneinheit zur Berechnung des Temperaturfeldes (5) in dem Phasenwechselmaterial (2) verwendet wird.

5. Verfahren nach einem der Ansprüche 1 bis 4, **dadurch gekennzeichnet, dass** für die Bestimmung des Ladezustandes (6) anhand des Temperaturfeldes (5) ein vorangegangener Ladezustand (6) des Phasenwechselmaterials (2) miteinbezogen wird.

6. Verfahren nach einem der Ansprüche 1 bis 5, **dadurch gekennzeichnet, dass** eine Wärmezufuhr in den Latentwärmespeicher (1) und eine Wärmeabfuhr aus dem Latentwärmespeicher (1) gemessen, und von der Recheneinheit zur Berechnung des Temperaturfeldes (5) in dem Phasenwechselmaterial (2) verwendet wird.

7. Verfahren nach einem der Ansprüche 1 bis 6, **dadurch gekennzeichnet, dass** das Phasenwechselmaterial (2) für die Berechnung des Temperaturfeldes (5) entlang einer Flussrichtung (7) eines Wärmeträgerfluids (8) in mehrere Sektoren (9) unterteilt wird, und dass pro Sektor (9) lediglich eine gemessene Temperatur für die Berechnung des Temperaturfeldes (5) verwendet wird.

8. Latentwärmespeicher (1) umfassend ein, im Wesentlichen ortsfest angeordneten Phasenwechselmaterial (2), wobei an wenigstens zwei Positionen (3) des Latentwärmespeichers (1) Temperatursensoren (4) angeordnet sind, wobei die Temperatursensoren (4) schaltungstechnisch mit einer Recheneinheit zur Bestimmung eines Ladezustandes (6) des Latentwärmespeichers (1) verbunden sind, **dadurch gekennzeichnet, dass** zur Bestimmung des Ladezustandes (6) von der Recheneinheit anhand von gemessenen Temperaturen der Temperatursensoren (4) ein Temperaturfeld (5) in dem Phasenwechselmaterial (2) berechnet, und anhand des Temperaturfeldes (5) eine Verteilung eines lokalen Ladezustandes (6) des Phasenwechselmaterials (2) bestimmt wird.

9. Latentwärmespeicher (1) nach Anspruch 8, **dadurch gekennzeichnet, dass** der Latentwärmespeicher (1) einen Zufluss (10) und einem Abfluss für ein Wärmeträgerfluid (8) aufweist, und dass beim Zufluss (10) und beim Abfluss ein Sensor zur Bestimmung einer zugeführten Wärmeenergie und einer abgeführten Wärmeenergie angeordnet ist.

10. Latentwärmespeicher (1) nach Anspruch 8 oder 9, **dadurch gekennzeichnet, dass** die Temperatursensoren (4) entlang einer Flussrichtung (7) eines Wärmeträgerfluids (8) angeordnet sind.

11. Latentwärmespeicher (1) nach einem der Ansprüche 8 bis 10, **dadurch gekennzeichnet, dass** einer der Temperatursensor (4) mehrere Messfühler aufweist, wobei die gemessene Temperatur des Temperatursensors (4) ein Mittelwert von Messwerten der Messfühler ist.

## Claims

1. Method for determining a charge state of a latent heat storage device (1), wherein a phase change material (2) is arranged in a substantially stationary manner in the latent heat storage device (1), wherein a temperature is measured at at least two positions (3) of the latent heat storage device (1) by means of temperature sensors (4), **characterized in that** a temperature field (5) in the phase change material (2) is calculated by a computing unit with the measured temperatures, and **in that** a distribution of a local charge state (6) of the phase change material (2) is determined by means of the temperature field (5).

2. Method according to claim 1, **characterized in that** for the calculation of the temperature field (5) an energy balance equation is established at least for the phase change material (2).

3. Method according to claim 1 or 2, **characterized in that** the charge state (6) is a ratio of the phase change material (2) in a first phase state to the sum of the phase change material (2) in the first phase state and a second phase state.

4. Method according to one of claims 1 to 3, **characterized in that** a temporal change of the measured temperatures is used by the computing unit to calculate the temperature field (5) in the phase change material (2).

5. Method according to one of claims 1 to 4, **characterized in that** a previous charge state (6) of the phase change material (2) is also included for determining the charge state (6) by means of the temperature field (5).

6. Method according to one of claims 1 to 5, **characterized in that** a heat supply into the latent heat storage device (1) and a heat dissipation from the latent heat storage device (1) is measured and is used by the computing unit to calculate the temperature field (5) in the phase change material (2).

7. Method according to one of claims 1 to 6, **characterized in that** the phase change material (2) is divided into several sectors (9) along a flow direction (7) of a heat transfer fluid (8) for the calculation of the temperature field (5), and **in that** only one measured temperature per sector (9) is used for the calculation of the temperature field (5).

8. Latent heat storage device (1), comprising a phase change material (2) which is arranged essentially in a fixed position, wherein temperature sensors (4) are arranged at at least two positions (3) of the latent heat storage device (1), wherein the temperature sensors (4) are connected in terms of circuitry to a computing unit for determining a charge state (6) of the latent heat storage device (1), **characterized in that,** in order to determine the charge state (6), the computing unit calculates a temperature field (5) in the phase change material (2) on the basis of measured temperatures of the temperature sensors (4), and a distribution of a local charge state (6) of the phase change material (2) is determined on the basis of the temperature field (5).

9. Latent heat storage device (1) according to claim 8, **characterized in that the** latent heat storage device (1) has an inflow (10) and an outflow for a heat transfer fluid (8), and **in that** a sensor for determining a supplied thermal energy and a discharged thermal energy is arranged at the inflow (10) and at the outflow.

10. Latent heat storage device (1) according to claim 8 or 9, **characterized in that** the temperature sensors (4) are arranged along a flow direction (7) of a heat transfer fluid (8).

11. Latent heat storage device (1) according to one of claims 8 to 10, **characterized in that** one of the temperature sensors (4) has a plurality of measuring sensors, wherein the measured temperature of the temperature sensor (4) is an average value of measured values of the measuring sensors.

## Revendications

1. Procédé pour déterminer un état de charge d'un accumulateur de chaleur latente (1), un matériau à changement de phase (2) étant disposé de manière sensiblement fixe dans l'accumulateur de chaleur latente (1), une température étant mesurée en au moins deux positions (3) de l'accumulateur de chaleur latente (1) au moyen de capteurs de température (4), **caractérisé en ce qu'**un champ de température (5) dans le matériau à changement de phase (2) est calculé par une unité de calcul à partir des températures mesurées, et qu'une répartition d'un état de charge local (6) du matériau à changement de phase (2) est déterminée au moyen du champ de température (5).

2. Procédé selon la revendication 1, **caractérisé en ce que** pour calculer le champ de température (5), une équation de bilan énergétique est établie au moins pour le matériau à changement de phase (2).

3. Procédé selon la revendication 1 ou 2, **caractérisé en ce que** l'état de charge (6) est un rapport du matériau à changement de phase (2) dans un premier état de phase sur la somme du matériau à changement de phase (2) dans le premier état de phase et un deuxième état de phase.

4. Procédé selon l'une des revendications 1 à 3, **caractérisé en ce que** l'unité de calcul utilise une variation dans le temps des températures mesurées pour calculer le champ de température (5) dans le matériau à changement de phase (2).

5. Procédé selon l'une des revendications 1 à 4, **caractérisé en ce qu'**un état de charge précédent (6) du matériau à changement de phase (2) est pris en compte pour déterminer l'état de charge (6) à partir du champ de température (5).

6. Procédé selon l'une des revendications 1 à 5, **caractérisé en ce qu'**un apport de chaleur dans l'accumulateur de chaleur latente (1) et une dissipation de chaleur de l'accumulateur de chaleur latente (1) sont mesurés et utilisés par l'unité de calcul pour calculer le champ de température (5) dans le matériau à changement de phase (2).

7. Procédé selon l'une des revendications 1 à 6, **caractérisé en ce que** le matériau à changement de phase (2) est divisé en plusieurs secteurs (9) le long d'une direction d'écoulement (7) d'un fluide caloporteur (8) pour le calcul du champ de température (5), et qu'une seule température mesurée par secteur (9) est utilisée pour le calcul du champ de température (5).

8. Accumulateur de chaleur latente (1) comprenant un matériau à changement de phase (2) disposé de manière sensiblement fixe, dans lequel des capteurs de température (4) sont disposés en au moins deux positions (3) de l'accumulateur de chaleur latente (1), les capteurs de température (4) étant reliés dans un circuit à une unité de calcul pour déterminer un état de charge (6) de l'accumulateur de chaleur latente (1), **caractérisé en ce que**, pour déterminer l'état de charge (6), l'unité de calcul calcule un champ de température (5) dans le matériau à changement de phase (2) à partir des températures mesurées par les capteurs de température (4), et qu'une répartition d'un état de charge local (6) du matériau à changement de phase (2) est déterminée au moyen du champ de température (5).

9. Accumulateur de chaleur latente (1) selon la revendication 8, **caractérisé en ce que** l'accumulateur de chaleur latente (1) présente une entrée (10) et une sortie pour un fluide caloporteur (8), et qu'un capteur pour déterminer une énergie thermique apportée et une énergie thermique dissipée est disposé à l'entrée (10) et à la sortie.

10. Accumulateur de chaleur latente (1) selon la revendication 8 ou 9, **caractérisé en ce que** les capteurs de température (4) sont disposés le long d'une direction d'écoulement (7) d'un fluide caloporteur (8).

11. Accumulateur de chaleur latente (1) selon l'une des revendications 8 à 10, **caractérisé en ce que** l'un des capteurs de température (4) présente plusieurs sondes de mesure, la température mesurée par le capteur de température (4) étant une moyenne des valeurs mesurées par les sondes de mesure.
